Europäisches Patentamt

**European Patent Office**

Office européen des brevets

(11) Publication number: **0 055 022**
A2

# EUROPEAN PATENT APPLICATION

(21) Application number: **81305285.9**

(22) Date of filing: **06.11.81**

(51) Int. Cl.³: **A 01 K 89/01**

(30) Priority: **22.12.80 US 218928**

(43) Date of publication of application: **30.06.82**
**Bulletin 82/26**

(84) Designated Contracting States: **DE FR GB IT SE**

(71) Applicant: **BRUNSWICK CORPORATION, One Brunswick Plaza, Skokie Illinois 60077 (US)**

(72) Inventor: **Neufeld, Henry L., 6013 E.57th Place, Tulsa Oklahoma 74135 (US)**

(74) Representative: **Allden, Thomas Stanley et al, A.A. THORNTON & CO. Northumberland House 303-306 High Holborn, London WC1V 7LE (GB)**

(54) **Fishing reel.**

(57) A spin casting style fishing reel is disclosed which hangs below a fishing rod. The reel has a back support housing, a reel body, and a front cover. The internal mechanism may be mounted to the reel body and, when so assembled, consists of a single unit. The reel body is mounted to the back support housing, said housing having the stem and mounting foot for mounting to the fishing rod. The front cover is mounted over the other end of the reel body to complete the assembly of the fishing reel.

## Description

## Fishing Reel

## Technical Field

This invention relates to a fishing reel and more particularly to a fishing reel having an internal mechanism which may be easily assembled as a single unit and wherein the stem for supporting the three-part housing for an under-the-rod reel is integral with the rear cover.

## Background Art

Numerous types of fishing reels are on the market and are well known. Generally, the spin casting style fishing reels are constructed of three major components: a rear cover, a front cover and a central reel body. The reel body is mounted either between the two cover components or entirely inside those components.

Of those reels where the reel body is mounted entirely inside the cover components, assembly is generally difficult inasmuch as the internal mechanism assembled to a deck plate of the reel body must be assembled thereto in position so as not to interfere with the cover components. This creates difficulty in providing access to the various internal mechanisms through the cover components for operating the various mechanisms.

Similar problems arise with those fishing reels in the prior art where the reel body is mounted between the cover components. In those cases, the stem for mounting the reel to a fishing rod has been mounted to the reel body. Inasmuch as a certain amount of space of the reel body must necessarily be exposed around the perimeter to enable the stem to be securely mounted, the reel body has been forced to be a major portion of the housing itself.

Unfortunately, this has resulted in the reel body having an outer shell much longer than is desirable and it results in a tubular shape of the interior of the reel body. This tubular shape restricts access to the portions of the reel body where the internal mechanism must be assembled, thereby increasing the difficulty in assembling and servicing the reel.

This invention is directed to overcoming one or more of the problems as set forth above.

Disclosure of the Invention

A spin casting style fishing reel is disclosed which hangs below a fishing rod. The reel has a back support housing, a reel body, and a front cover. The internal mechanism may be mounted to the reel body and, when so assembled, consists of a single unit. The assembled unit is mounted to the back support housing, said housing having the stem and mounting foot for mounting to the fishing rod. Finally, the front cover is mounted over the other end of the unit to complete assembly of the fishing reel.

As decribed in the previous section, reels of the prior art, particularly those having the reel body mounted between the two cover components, have been somewhat difficult to assemble. By using a stem which extends radially from the back support housing as disclosed herein, rather than from the reel body, the reel body may be shorter and thus less tubular (i.e. the tubular portion may be shorter). The reel body is thus open so as to provide easy access thereto during assembly. Accordingly, the reel may be assembled more easily, resulting in obvious cost advantages. The back support housing inherently has a certain length that is adequate and provides sufficient strength to accept the stem without changing the length or style of the back support housing. The overall result is a shorter, more simply assembled and serviced, and less expensive reel all without sacrificing quality of construction or efficiency of operation.

## Brief Description of the Drawings

Fig. 1 is an exploded view of a reel embodying the invention;

Fig. 1A is a rear perspective of the gear and ratchet of the crankshaft;

Fig. 2 is a view of the major assembly components of the reel, showing the body assembly; and

Fig. 3 is a view partially broken away and in section of the assembled fishing reel.

## Best Mode for Carrying Out the Invention

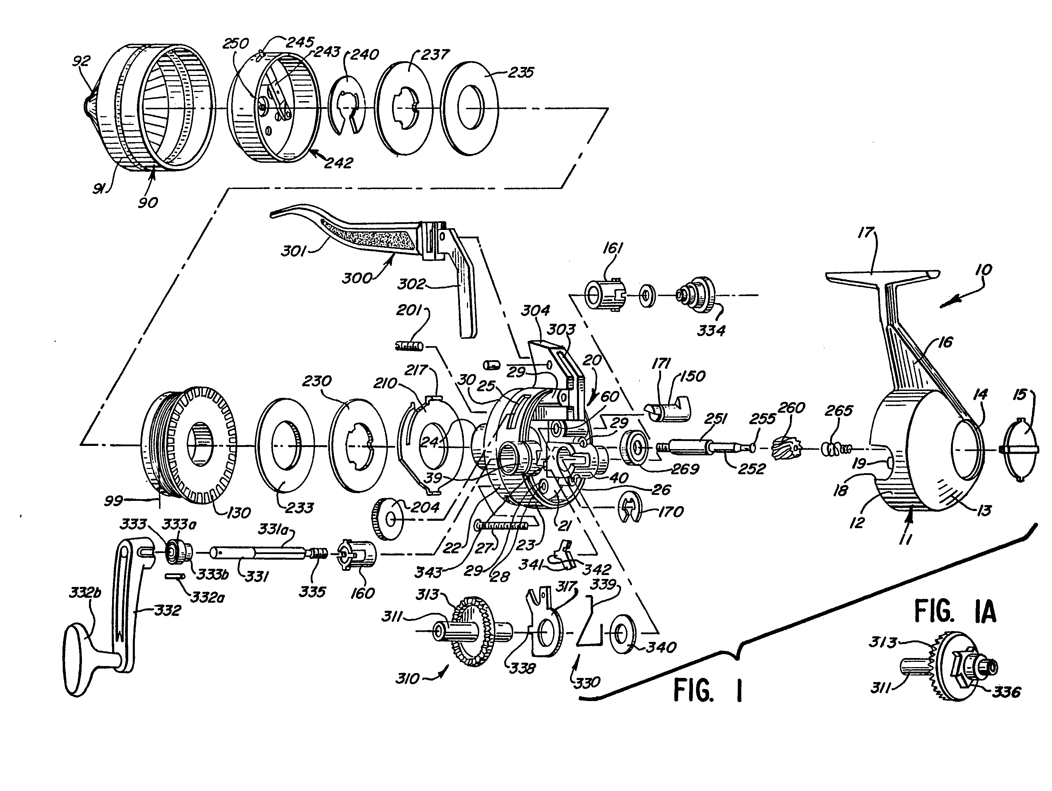

Fig. 1 generally depicts an exploded perspective view of a fishing reel 10 of the spin casting type containing the preferred embodiment of the invention. A back support housing 11, preferably made of an aluminum alloy material, has a cylindrical cover 12, one end of which is open and the other end of which merges into a semi-spherical rear wall 13 having a center opening 14 in which is seated a back cap 15. A stem 16 is integrally cast with the cylindrical cover 12 and has a mounting foot 17 which is used to attach the reel 10 to a spinning style fishing rod (not shown). A body 20, made of a plastic material, such as a glass filled polycarbonate, has a transverse deck plate 21 with a first or forward circumferential body portion 22 and a second or rearward circumferential body portion 23. A central hub 24 projects forward of the deck plate 21 with a drag plate 210, back spool washer 230, back flat drag washer 233, spool assembly 130, front flat drag washer 235, front spool washer 237, all secured to the hub 24 by means of spool retainer clip 240 which fits into a groove (not shown in Fig. 1) in the distal end of hub 24. The body 20 is secured to the back support housing 11 by inserting an inset flange 26 on the rearward body portion 23 of the body 20 into the one open end of the cylindrical cover 12 of the back support housing 11 and threading screws 27, only one of which is shown in Fig. 1, through apertures 28 in bosses 29 formed through and on the deck plate 21 and into mating bosses (not shown in Fig. 1) in the back support housing 11. A front cover 90, which has a cylindrical body portion 91 and a cone-shaped front portion 92, is secured on an offset portion 30 of the forward body portion 22.

A center shaft 251 is mounted in a center hole (not shown in Fig. 1) in the hub 24 with a spinner head assembly 242 threaded by means of the threaded opening 250 on the forward threaded end of the shaft 251. The spinner head assembly 242 partially surrounds the forward flange of the spool assembly 130 with fishing line 99 being wound thereon. The cone-shaped front portion 92 of the front cover 90 has a front hole (not shown in Fig. 1) which acts as a fishing line guide as the line 99 is cast from the reel 10 and rewound after casting.

A clutch head screw 201 passes through a pilot hole or guide (not shown in Fig. 1) in the deck plate 21 with the slotted head of the screw positioned in the interior of the forward body portion 22 and with a clutch wheel 204 projecting outward of a slot 25 in the rearward body portion 23 threadingly engaging with the body of the clutch head screw 201 where the screw projects into said rearward body portion 23. A tab 217 on the drag plate 210 fits into the head of screw 201 so that when the clutch wheel 204 is revolved upward toward stem 16, the screw 201 advances forward toward the spool retainer clip 240, increasing the clamping force on the spool assembly 130 so that the ability of the spool assembly 130 to revolve relative to the hub 24 is decreased. When the clutch wheel 204 is revolved away from the stem 16, the clamping force is decreased and the spool assembly 130 is permitted to revolve more freely relative to hub 24, thus providing the adjustable drag mechanism for the fishing reel 10.

The center shaft 251 is slidably and rotatably mounted in a bearing 269 which is mounted in the rear of the hub 24 in the deck plate 21. A pinion gear 260 is splined on a reduced diameter portion 252 of the center shaft 251 and is resiliently maintained in a forward position against the deck plate 21 by a center shaft spring 265. The pinion gear 260 and center shaft 251, being splined together, will have relative axial sliding motion, but rotation of the pinion gear 260 will rotate the center shaft 251. The spring 265 bears against an abutting end 255 on the center shaft 251 to urge the pinion gear 260 against the deck plate 21 and to urge the center shaft 251 in a rearward direction relative to the deck plate 21.

A finger brake lever 300 is mounted on the body 20 with an operating handle 301 exterior of and extending forwardly from the first or forward body portion 22. An operating leg 302 extends through a slot 303 in an upstanding bracket 304 on the body 20 and into the second or rearward body portion 23 for operable contact with the rearward end 255 of the center shaft 251. When the exterior operating handle 301 of the finger brake lever 300 is pulled upward toward the mounting foot 17, operating leg 302 engages the end 255 of the center shaft 251. The center shaft 251 and the spinner head assembly 242 mounted thereon are pushed forward relative to the bearing 269 and the hub 24. A pickup pin mechanism 243, mounted on and within spinner head assembly 242, is, at this point, in retracted position and cooperates with a forward face of a cam (not shown in Fig. 1) carried by the face of the hub 24. When the finger brake lever 300 is fully pivoted toward the mounting foot 17, the spinner head assembly 242 is held in a brake position against the inside of the front cover 90 to trap the line 99 therebetween to prevent casting of the line. Slightly releasing the finger brake lever 300 will maintain the spinner head assembly 242 in a forward casting position, but the spring 265 will retract the center shaft 251 and the spinner head assembly 242 enough to unclamp the fishing line 99 whereby the spinner head assembly 242 will not interfere with the fishing line 99 which can then be cast freely from the reel 10.

A crank assembly 310 is mounted in transversely extending hollow bearing bosses 39 and 40 integrally formed on the wall of the rearward body portion 23. Crank bearing sleeve means 160 and 161 are mounted respectively in the bearing bosses 39 and 40 to provide suitable bearings for a hollow crankshaft 311 of the crank assembly 310. The follow crankshaft 311 supports an anti-reverse assembly 330 which will be described in more detail hereinafter.

A crank rod 331 is pivotally connected to a crank handle 332 by means of a pin 332a and the crank rod 331 is slip-fitted into the hollow crankshaft 311 and has flats 331a which mate with flats in the hollow crankshaft 311 to key the crankshaft 311 thereto. A fitting 333 which slides on the crank rod 331 inwardly of the pin 332a has an outer portion 333a that slides easily into one of the bosses 39 or 40 and has an inner portion 333b of smaller diameter which slides easily into the outer end of one of the crank bearing sleeve means 160 or 161. A crank rod nut 334 is secured to a threaded end 335 of the crank rod 331 to fasten said rod 331 to the reel 10. The crank rod 331 can be removed from the side of the reel 10 that it occupies in Fig. 1, and mounted in the opposite side by unfastening the nut 334 in sleeve means 161, removing the crank handle 332 and crank rod 331 from the hollow boss 39, inserting the crank rod 331 in the hollow boss 40, and refastening the nut 334 on the end of the rod in the sleeve means 160. The crank handle 332 has a crank knob 332b for gripping by the hand of the user.

Fixed to the hollow crankshaft 311 is a face gear 313 which is in engageable contact with the pinion gear 260 on the shaft 251 so that when the crank handle 332 is rotated in a forward direction (toward the front cover 90 as viewed in Fig. 1), the shaft 251 rotates causing the spinner head assembly 242 to rotate as well. This rotative motion disengages the pickup pin mechanism 243 from the forward face of the cam on the hub 24, causing the spinner head assembly 242 to move rearward as the pickup pin mechanism 243 rides up the cam to extend the pickup pin 245 outwardly beyond the spinner head assembly 242 so that the rotation of the crank handle 332 will rotate the spinner head assembly 242 to wind the fishing line 99 on the spool assembly 130.

Crank assembly 310 is coupled with an anti-reverse assembly 330, which comprises a ratchet 336, mounted on the crankshaft 311 against the back side of face gear 313 as shown in Fig. 1(a), an anti-reverse drag arm 337 having a transverse lug 338, a drag spring 339 and spacer washer 340 all mounted on the hollow crankshaft 311. An anti-reverse pawl 341 having a pivot tang 342 pivotably mounted in an aperture 343 in the deck plate 21, is positioned again t the back of the face gear 313 between the deck plate 21 and the transverse lug 338 on the drag arm 337 for engageable and disengageable contact with the ratchet 336.

Anti-reverse actuator 150 is mounted in upper housing sleeve 60 that opens through the wall of the rearward body portion 23 of body 20 and the actuator 150 is retained in the sleeve 60 by retainer clip 170 seated in slot 171 in the body of the anti-reverse actuator 150. The anti-reverse actuator 150 is in cooperative contact, as will be described hereinafter, with the anti-reverse drag arm 317. In one position, the actuator 150 disengages the anti-reverse assembly 330 permitting the crank rod 331 and the crank assembly to rotate in either the forward direction (upward toward the stem 16) or the reverse direction (downward from the stem 16 toward the back of the reel 10). In the other position of the actuator 150, the crank assembly can rotate to wind the line 99 on the spool 130.

The above described design may be easily manufactured and the internal mechanism easily assembled. The advantageous feature permitting easy assembly is that the internal mechanism is assembled on to the body 20 as a single unit. Furthermore, since the mounting stem 16 is mounted to the back support housing 11, rather than to the body 20 as is conventional, the body 20 may comprise a shorter section of the housing, less axial housing length being required since space is not required around the periphery to attach the stem 16. Reducing the axial length at the periphery of the body 20 results in a body 20 which is not as tubular as those in the prior art and thus is open to provide easy access thereto during assembly.

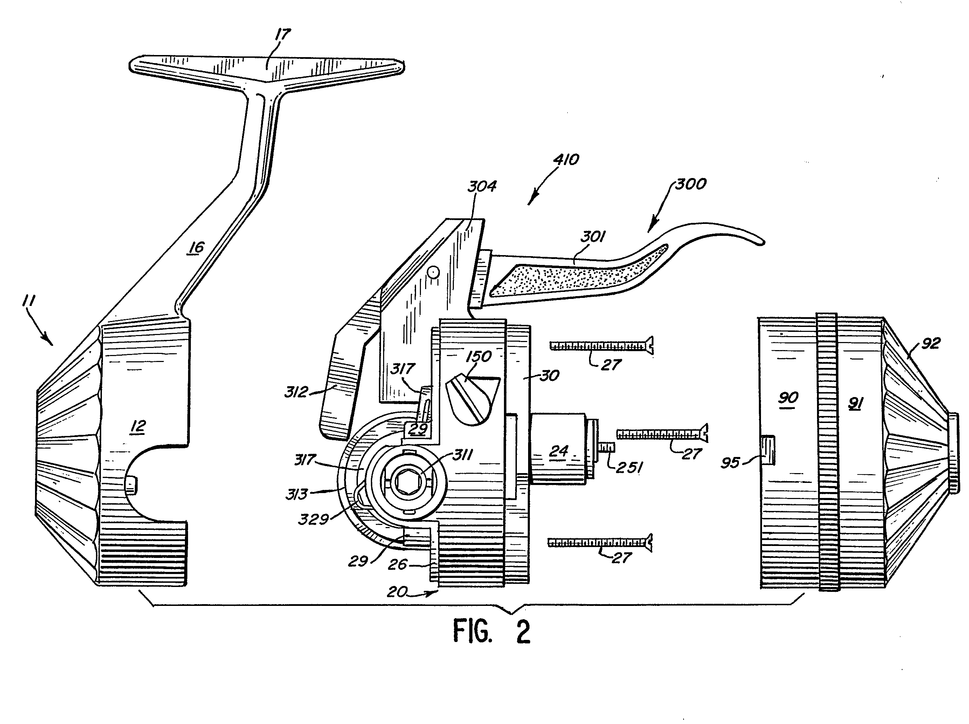

More specifically, the fishing reel 10 may be assembled as follows. The various components shown in Fig.1 as being secured to the deck plate 21 of the body 20, such as the center shaft 251, the clutch wheel 204, the finger brake lever 300, the crank assembly 310, the anti-reverse assembly 330 and associated parts, are assembled on the rearward side of the deck plate 21.When so assembled, the internal mechanism is together and comprises the body assembly 410 shown in midportion of Fig. 2. The body 20 is secured to the back support housing II by means of screws 27. Then the drag plate 210, back spool washer 230, back flat drag washer 233, spool assembly 130, front flat drag washer 235 and front spool washer 237 are slid on the hub 24 projecting forward from the deck plate 21 and are secured thereto by the spool retainer clip 240. The spinner head assembly 242 is threaded on the front end of the center shaft to complete the assembly of the operative parts on the body portion. The assembly of the components onto the deck plate 21 is simple since the back components may all be mounted independent of the back support housing II, thereby providing unrestricted access to the body 20 for the assembly of each component. And, as previously mentioned, the body 20 itself is more open than the bodies found in the prior art so that greater access is provided for such assembly.

As already stated, the crank handle 332 when mounted on one side of the reel can be removed and turned around and reassembled to the other side of the reel as an assembled unit. Accordingly, the crank handle 332 and the time, either when the internal mechanism is being assembled on the body 20 or after the entire reel 10 has been assembled.

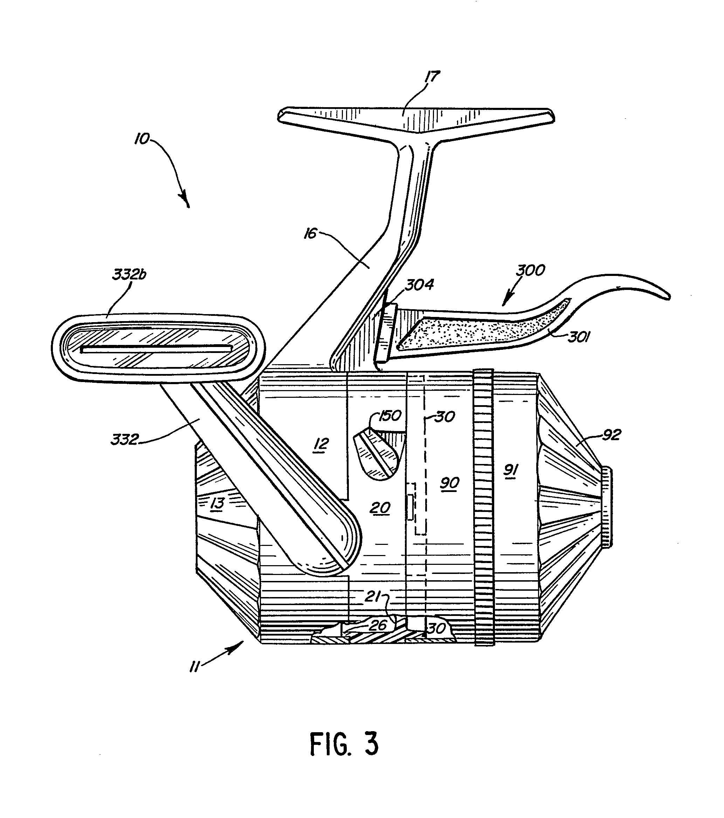

The body assembly 410 may be mounted to the back support housing 11 by insertion of the three threading screws 27 through the deck plate 21 and bosses 29 and into the mating bosses of the back support housing 11. Final assembly of the reel 10 may then be accomplished by sliding the front cover 90 over the spinner head assembly 242 and locking the front cover 90 to the reel body 20 by a partial relative turn between the two. The front cover 90 has inwardly struck tongues 95 at two or more spaced apart locations around the peripheral edge portion thereof. The offset portion 30 of the reel body 20 (Fig. 3) has inclined grooves 96 located at positions mating with the locations of the tongues 95 in the cover. Threading the offset 30 of forward portion 23 into the front cover 90 and turning the cover relative to the reel body 20 will interengage the tongues 95 and grooves 96 to secure the cover 90 to the reel thereby completing the assembly of the reel 10.

The reel 10 is a three part reel with a relatively narrow axial reel body 20, which supports substantially all of the operative parts of the reel, assembled with the rear support housing 11 and the front cover 90. The rear support housing carries the stem 16 and mounting foot 17 for attachment below the fishing rod in a novel and unique manner.

Claims

1.  A spin casting style fishing reel that hangs below a fishing rod comprising:

a back support housing having a stem for mounting to a fishing rod extending radially therefrom, said housing having a forwardly facing edge around the open front of the housing;

a reel body having a deck plate with first and second portions extending forwardly and rearwardly therefrom respectively, the deck plate having a forwardly extending hub;

bracket means for pivotally supporting a finger brake on the reel body;

a center shaft, crank assembly, an anti-reverse assembly, and a drag mechanism mounted to the deck plate;

means for securing the second portion of the reel body to the open front of the back support housing;

a spool rotatably mounted on the hub;

a spinner head mounted on the forward end of the center shaft; and

a front cover mounted to the first portion of the reel body over said spinner head.

2.  A spin casting style fishing reel that hangs below a fishing rod, comprising:

a back support housing having a stem extending radially therefrom, a mounting foot on the stem for attachment to a fishing rod, the back support housing having a forwardly facing edge around the open front of the housing;

a cylindrical reel body having a deck plate, including a first portion projecting forward of the deck plate and a second portion projecting rearward of the deck plate;

bracket means projecting upwardly from the reel body for pivotally supporting a finger brake lever;

a center shaft axially movable in a center hub on the deck plate, including a spinner head mounted on the center shaft and spring means urging the center shaft rearward of the hub and being engaged by one arm of the finger brake lever;

a spool rotatably mounted on the hub between the spinner head and the deck plate;

crank means mounted on the reel body for rotating the spinner head relative to the spool;

means for securing said cylindrical reel body to the back support housing with the second portion of the reel body nesting in the forwardly facing edge of the support housing;

a front cover having a cylindrical sleeve portion open at the rear of the cover and a cone-shaped front merging into a beaded center opening; and

means for fastening the cylindrical sleeve of the front cover to the first portion of the reel body.

FIG. 1

FIG. 1A

FIG. 2

FIG. 3

0055022